# EUROPEAN PATENT APPLICATION

(11) **EP 3 967 875 A1**
(43) Date of publication of application: **16.03.2022**
(21) Application number: 20382802.5
(22) Date of filing: 11.09.2020
(51) Int. Cl.: F03D 15/00, F03D 80/80, F16F 15/04

(54) **WIND TURBINE COMPRISING A FRAME AND A COMPONENT**

(71) Applicant: Siemens Gamesa Renewable Energy Innovation & Technology S.L., 31621 Sarriguren (Navarra) (ES)
(72) Inventor: Garcia Perez, Jose Manuel, 01010 Vitoria-Gasteiz (ES)
(74) Representative: Aspacher, Karl-Georg

(57) **Abstract**

Wind turbine comprising a frame (4), especially a frame (4) arranged in or formed by a nacelle (21) of the wind turbine (17), and a component (16), especially a gearbox, wherein the component (16) is fixed to the frame (4) using at least one guide pin (1) that is attached to the frame (4) or formed by the frame (4) and that extends through a respective through hole (22) of the component (16), wherein an angle between the longitudinal direction of the respective guide pin (1) and the vertical direction is less than 45°, and wherein at least one piece of elastomer (2, 9) is arranged between an inner surface (23) of the respective through hole (22) and the respective guide pin (1).

## Description

The invention concerns a wind turbine comprising a frame, especially a frame arranged in or formed by a nacelle of the wind turbine, and a component, especially a gearbox.

Many wind turbines use a gearbox to transform the speed of the rotation of the rotor of the wind turbine to a higher speed of an output shaft that drives the generator. This allows a reduction of the torque fed to the generator and therefore allows the use of a smaller generator, consequently reducing the cost and weight thereof.

During the operation of the wind turbine large torques can be transferred to the housing of the gearbox. If the gearbox would be directly coupled to a frame of the nacelle, the resulting loads can increase the wear and tear of the frame and the gear box. It is therefore advantageous to couple the gearbox to the frame using an elastomer.

A possible design for such a coupling using an elastomer is disclosed in the document EP 3 173 620 A1. This document suggests to use a bracket mounted to the frame to clamp a respective lateral protrusion of the gearbox to the frame. A first piece of elastomer is placed below the respective protrusion and therefore between the protrusion and the frame. A second piece of elastomer is placed above the protrusion and therefore between the bracket and the protrusion. Such an arrangement can only absorb vertical forces and forces acting in the radial direction of the gearbox. Any lateral or axial loads and vibrations acting on the gearbox can lead to a slippage of/or to shear forces on the elastomer, potentially reducing its lifetime. If such a construction is combined with a tilt angle of the gearbox, it will either require an additional axial support to reduce slippage and shear forces or strong clamping forces which can reduce the damping effect and further increase wear and tear.

The invention is therefore based on the problem of providing a wind turbine with an improved connection between at least one component, especially a gearbox, and a frame, wherein the connection should be especially used to dampen vibrations and/or a transference (i.e. transmission) of torque to the frame.

The problem solved by a wind turbine comprising a frame, especially a frame arranged in or formed by a nacelle of the wind turbine, and a component, especially a gearbox, wherein the component is fixed to the frame using at least one guide pin that is attached to the frame or formed by the frame and that extends through a respective through hole of the component, wherein an angle between the longitudinal direction of the respective guide pin and the vertical direction is less than 45°, and wherein at least one piece of elastomer is arranged between an inner surface of the respective through hole and the respective guide pin.

By using at least one piece of elastomer extending more or less in the vertical direction along the guide pin, it becomes possible to not only absorb forces due to a torque transfer but also to absorb lateral and axial forces. By supporting the piece of elastomer at both ends in the longitudinal direction of the pin, wear due to slippage and/or shearing can be avoided or at least strongly reduced. Approaches for supporting the piece of elastomer will be discussed later.

If the guide pin is not formed by the frame itself it can e.g. comprise a flange for attaching it to the frame, e.g. by screws or bolts. The use of a guide pin that is formed separately from the frame and attached to the frame, e.g. by a flange, can be advantageous, since it can allow for a horizontal mounting of the component. It is e.g. possible to first insert the guide pin into the through hole and optionally fix it to the component. A flange or more general a connecting section of the guide pin can then be placed on the frame, especially on a respective beam of the frame for each guide pin, and shifted along the frame, e.g. horizontally and/or in parallel to at least one shaft of the wind turbine, e.g. a shaft connected to the rotor. This e.g. allows for a shifting of a gearbox used as the component towards a shaft, e.g. a low-speed shaft connected to the rotor. The gearbox can then be fixed to the frame, e.g. by screwing or bolting a flange of the guide pin to the frame, and to the shaft.

A section of the piece of elastomer or a further piece of elastomer can be arranged between a bottom surface of the component that extends at an angle to the inner surface of the respective through hole and either a flange of the respective guide pin used to attach the respective guide pin to the frame or the frame itself. The bottom surface can especially be arranged at an angle of more than 45° or more than 60° or more than 80°, especially essentially orthogonal, to the inner surface of the respective through hole. While the at least one piece of elastomer arranged between the inner surface of the through hole and the guide pin therefore primarily provides support in directions orthogonal to the longitudinal direction of the guide pin, an additional support in the longitudinal direction can be provided by the section or further piece of elastomer arranged at the bottom surface of the component. This additional support can especially reduce shearing and slippage of the piece of elastomer arranged in the through hole of the component. If separate pieces of elastomer are used in the through hole and at the bottom surface, these pieces of elastomer can abut each other.

To simplify the construction of the wind turbine, the further piece of elastomer can be attached to the component prior to lowering the component onto the guide pin or prior to inserting the guide pin into the through hole. This can e.g. be achieved by a positive fit or an adhesive bond, e.g. by directly coating the bottom surface of the component with the elastomer.

The diameter of the respective guide pin can widen in an end section that extends beyond the side of the respective through hole facing away from the frame, wherein the diameter of the end section is smaller than the diameter of the respective through hole. This widening can directly be used to support the piece of elastomer by the end section. In an advantageous embodiment discussed in more detail below, the end section can also be used to support and/or limit the movement of fixing elements attached to a top surface of the component adjacent to the through hole. In this case the fixing elements can provide additional support for the elastomer arranged in the through hole. The additional support of the piece of elastomer can reduce shear and slippage and therefore wear and tear of the elastomer. The cited limitation for the diameter of the end section allows for feeding the guide pin through the through hole during the construction of the wind turbine.

For each respective guide pin at least a first and second fixing element can be attached to the component in such a way that a first surface of the respective fixing element abuts a stopper surface of the end section of that guide pin that extends at an angle to the longitudinal direction of that guide pin and faces towards the frame and that a second surface of the respective fixing element abuts a top surface of the component that extends at an angle to the inner surface of the respective through hole of the component and that faces away from the frame. Therefore, the fixing element can limit a movement of the component in the longitudinal direction of the guide pin. Preferably the component can be clamped by the layer of elastomer at the bottom surface of the component and the fixing elements.

The respective fixing element can be shaped as a ring segment. Each segment can extend through an angle of more then 120° or more then 150°, preferably through an angle of approximately 180°. The fixing elements can abut the stopper surface along at least 80% or 90% of the circumference of the stopper surface. The fixing elements are therefore supported by the guide pin in most directions.

As previously discussed, the respective fixing element can additionally abut the or at least one of the pieces of elastomer arranged in the through hole. The spacing between the fixing elements is preferably chosen to not allow the end section of the guiding pin to pass between the fixing elements while they are attached to the component.

A mounting of the fixing elements to the component is e.g. possible by inserting the fixing elements between the end section and the component from the side after inserting the guide pin into the through hole, e.g. by lowering the component onto the guide pin, and then fixing them to the component, e.g. by screws or bolts.

Preferably the first and second fixing element are attached to the component in such a way that they can slide along the top surface over a given sliding range in at least one direction. This allows for a relative movement of the component and the guide pin by deforming the piece of elastomer in the through hole without moving the fixing elements or at least without moving one of the fixing elements with respect to the guide pin. This relative movement can comprise a tilting of the through hole with respect to the guide pin and/or a movement orthogonal to the longitudinal direction of the guide pin. The elastomer in the through hole and optionally the elastomer at the bottom surface of the component can therefore be used to dampen the discussed movements. This is especially relevant, when the discussed arrangement for fixing the component is used for attaching a respective protrusion or beam of a gearbox to a frame, since a torque in the gearbox will lead to a tilting of such a beam and therefore to a tilting of a through hole used for the attachment of this beam.

In an exemplary embodiment, the respective fixing element can abut a shaft of the guide pin when no torque and/or lateral or axial forces are acting on the component. When torque or forces are applied, the elastomer can be compressed by shifting and/or tilting the component and therefore the through hole with respect to the guide pin. If the position of the fixing elements with respect to the component would be fixed, a movement of the component towards the pin would be blocked, since the fixing element already abuts the shaft of the guide pin. This can be avoided by allowing a relative movement as discussed above.

The respective fixing element can be fixed to the component by at least one fixing device, especially by a screw, wherein a section of the fixing device passes through a through hole of the fixing element, wherein the diameter of this section is smaller than the diameter of the through hole. Preferably the diameter of the section is smaller by a factor of at least 1.3 or at least 1.5 or by at least 3 mm or 5 mm. Using a fixing device with a diameter smaller than the diameter of the through hole of the respective fixing element allows for a relative shifting and/or tilting of the fixing device with respect to the through hole and therefore for a relative sliding and/or tilting of the component and the fixing element. The fixing element can therefore remain in the same position and/or orientation with respect to the guide pin, while the position and/or orientation of the component changes.

At least two of the pieces of elastomer can be arranged between the inner surface of the respective through hole and the respective guide pin, wherein the two pieces cover different sections of the circumference of the respective guide pin. Using separate pieces of elastomer for different sections of the circumference of the guide pin allows for an easy mounting of the elastomer on the guide pin, even when the diameter of the end section of the guide pin is wider than the inner diameter of the layer of elastomer arranged between the inner surface of the through hole and the guide pin. Alternatively, it would e.g. be possible to stretch the elastomer to pull it over the end section or to directly coat the flanks of the guide pin.

Preferably, at least 50 % or at least 75 % or at least 90 % of the circumference of the section of the guide pin extending through the through hole can be covered by elastomer.

The component can be fixed to the frame using two of the guide pins, wherein the component comprises two support beams that extend from a central body portion of the component, wherein each of the support beams comprises one of the through holes, and wherein each of the guide pins extends through a respective one of those through holes. The support beams can especially extend in the lateral direction of the wind turbine and therefore approximately orthogonal to the axial direction of a drive shaft, especially of the generator. Both beams can extend approximately in the same horizontal plane.

A transfer of torque to the component, e.g. a gearbox, can lead to a tilting of the two beams. Such a tilting can be dampened by a compression of the elastomer arranged between the inner surface of the through hole and the guide pin and optionally additionally by the elastomer arranged at the bottom surface of the component. Preferably two distinct bottom surfaces, each one surrounding one of the through holes, are covered by elastomer in this case.

The guide pins can be e.g. be formed on different beams of the frame that are preferably spaced apart in the lateral direction and can extend approximately in the axial direction.

A section of the respective guide pin extending through the respective through hole of the component can be cylindrical. Additionally or alternatively, the inner surface of the through hole can have a cylindrical shape. By using cylindrical shapes, sharp edges can be avoided and therefore wear and tear of the elastomer can be reduced. Additionally, a cylindrical shape can be advantageous to improve a fitting of the components to each other, even when slight tolerances are present.

The angle between the longitudinal direction of the respective guide pin and the vertical direction can be less than 30° or less than 10°. Preferably the guide pin is essentially vertical. In these cases the component can be easily lowered onto the guide pin.

Preferably the component is a gearbox. Alternatively, the component could e.g. be a generator, e.g. a generator of a direct drive wind turbine.

Other objects and features of the present invention will become apparent from the following detailed description considered in conjunction with the accompanying drawings. The drawings, however, are only principle sketches designed solely for the purpose of illustration and do not limit the invention. The drawings show:
- Fig. 1: an exemplary embodiment of a wind turbine according to the present invention, and
- Figs. 2 and 3: detailed views of the wind turbine shown in fig. 1.

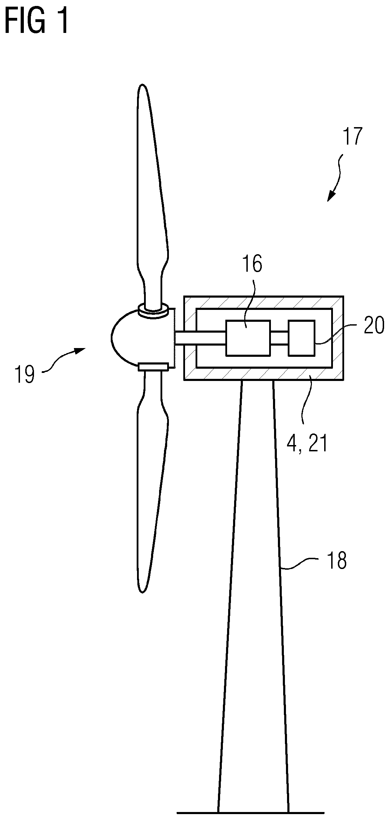

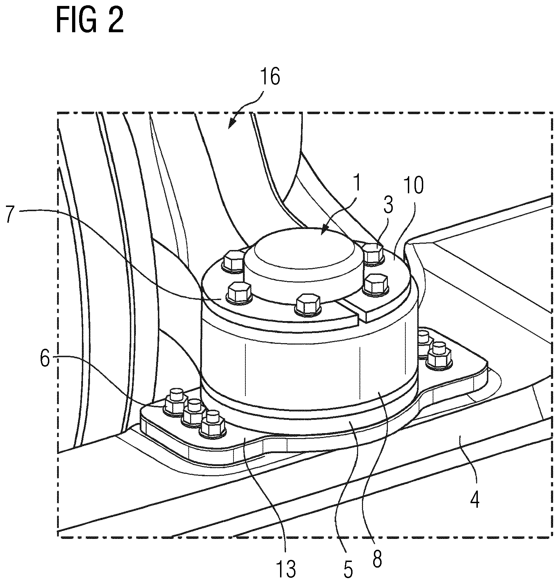

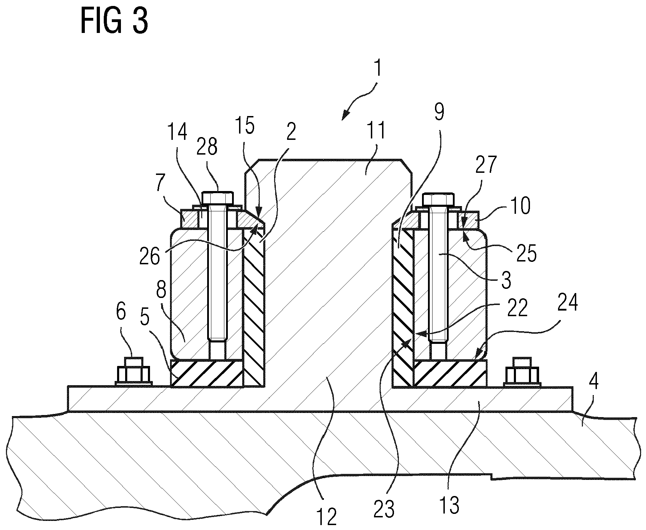

Fig. 1 shows a wind turbine 17 comprising a rotor 19 that is mounted to the tower 18 via a nacelle 21. The nacelle 21 comprises a frame 4 for mounting components 16, 20. In the example the component 16 is a gearbox and the component 20 is a generator. In the shown arrangement a generator is used to transform a rotation of the rotor 19 with a relatively low frequency to a rotation with a higher frequency to drive the generator. In this case, large torques can be exerted onto the generator. Therefore, the mounting of the generator and therefore the component 16 to the frame 4 uses a specific structure that will be discussed in detail with reference to figures 2 and 3.

The component 16 comprises two support beams 8 to attach the generator to two beams of the frame 4 that are spaced apart in the lateral direction of the wind turbine 17. Since the structure of both of these attachments is identical, only one of these attachments is shown in figures 2 and 3. Fig. 2 shows a perspective view of the relevant sections of the component 16 and the frame 4 and fig. 3 shows a sectional view orthogonal to the lateral direction of the wind turbine 17.

The component 16, specifically the support beam 8, is attached to the frame 4 using a guide pin 1, that is attached to the frame 4. In the example a flange 13 of the guide pin 1 is attached to the frame 4 by six screws 6. In this case the component 16 can first be attached to the guide pins 1 and the flange 13 of each of the guide pins 1 can be placed on a respective beam of the frame 4. The component 16 with the attached guide pins 1 can then be shifted along the frame 4 towards a low speed shaft attached to the rotor 16 and attached to this shaft and to the frame 4 in its final position. Alternatively, it would e.g. be possible to bolt the flange 13 to the frame 4.

In a further alternative it is possible to use a guide pin 1 that is formed by the frame 4 itself or that is attached to the frame 4 prior to connecting the component 16 to the guide pin 1. In this case the component 16 could e.g. be lowed vertically onto the guide pin 1.

The guide pin 1, specifically a section 12 of the guide pin 1, extends through a through hole 22 of the component 16 or more specifically of the support beam 8. In the example the longitudinal direction of the guide pin 1 is essentially vertical. In alternative embodiments the longitudinal direction of the guide pin 1 could be tilted with respect to the vertical direction, e.g. by an angle of up to 10° or up to 30° or up to 45°. This could e.g. be useful to allow for a tilting of the generator and therefore the axial direction of the wind turbine 17 with respect to the horizontal plane, which is desirable in some wind turbine designs.

To allow for a tilting and/or a sliding movement of the support beam 8 and therefore of the components 16 with respect to the guide pin 1 and therefore the frame 4, two or more pieces of elastomer 2, 9 are arranged around the circumference of the section 12 of the guide pin 1. Additional elastomer is coated to the bottom surface 24 of the component 16 or more specifically to the bottom surface 24 of the support beam 8.

When the support beam 8 is tilted due to a torque that is applied to the component 16, the different pieces of elastomer 2, 5, 9 are locally compressed to dampen the transfer of torque to the frame 4. The pieces of elastomer 2, 5, 9 can additionally dampen forces applied in the vertical, lateral and axial direction and a tilting around the longitudinal direction. Such forces and tilting can e.g. result from vibrations of the component 16, e.g. due to sudden changes of the wind speed that result in transient forces.

The support beam 8 is clamped between the elastomer 5 and fixing elements 7, 10, that are formed as a ring segments in the example. Respective surfaces 26 of the fixing elements abut a stopper surface 15 of an end section 11 of the guide pin 1. Due to the expansion of the diameter of the guide pin in the end section 11 compared to the section 12 of the guide pin 1 that extends through the through hole 22, the stopper surface 15 extends at an angle to the longitudinal direction of the guide pin 1 and faces towards the frame 4. The stopper surface 15 therefore limits the movement of the fixing elements 7, 10 in the longitudinal direction of the guide pin 1. Since a further surface 27 of the respective fixing element 7, 10 is in contact with the top surface 25 of the support beam 8 of the components 16, the previously discussed clamping results.

As shown in fig. 3 the fixing elements 7, 10 already abut the guide pin 1 in the situation shown, in which no torque or other forces except for gravity act on the component 16. If the relative position of the fixing elements 7, 10 and the support beam 8 of the component 16 would be fixed, a shifting of the inner surface 23 of the through hole 22 towards the pin 1 would be blocked by the respective fixing element 7, 10. To allow for such a shift, the fixing elements 7, 10 are attached to the beam 8 and therefore to the component 16 in such a way that the fixing elements 7, 10 can slide along the top surface 25 of the beam 8 and therefore the component 16.

To achieve such an attachment the fixing elements 7, 10 are attached to the component 16 via fixing devices 3, e.g. screws, that have a diameter that is smaller than the diameter of the through hole 14 in the respective fixing element 7, 10. Since a head 28 or a washer of the fixing device 3 extends beyond the edge of the through hole 14, the fixing elements 7, 10 are robustly fixed to the beam 8 and therefore to the component 16, while still allowing the previously mentioned sliding.

Although the present invention has been described in detail with reference to the preferred embodiment, the present invention is not limited by the disclosed examples from which the skilled person is able to derive other variations without departing from the scope of the invention.

### Reference numeral list

- 1: guide pin
- 2: elastomer
- 3: fixing device
- 4: frame
- 5: elastomer
- 6: screw
- 7: fixing element
- 8: beam
- 9: elastomer
- 10: fixing element
- 11: end section
- 12: section
- 13: flange
- 14: through hole
- 15: stopper surface
- 16: component
- 17: wind turbine
- 18: tower
- 19: rotor
- 20: component
- 21: nacelle
- 22: through hole
- 23: inner surface
- 24: bottom surface
- 25: top surface
- 26: surface
- 27: surface
- 28: head

## Claims

1. Wind turbine comprising a frame (4), especially a frame (4) arranged in or formed by a nacelle (21) of the wind turbine (17), and a component (16), especially a gearbox, **characterized in that** the component (16) is fixed to the frame (4) using at least one guide pin (1) that is attached to the frame (4) or formed by the frame (4) and that extends through a respective through hole (22) of the component (16), wherein an angle between the longitudinal direction of the respective guide pin (1) and the vertical direction is less than 45°, and wherein at least one piece of elastomer (2, 9) is arranged between an inner surface (23) of the respective through hole (22) and the respective guide pin (1).

2. Wind turbine according to claim 1, **characterized in that** a section of the piece of elastomer or a further piece of elastomer (5) is arranged between a bottom surface (24) of the component (16) that extends at an angle to the inner surface (23) of the respective through hole (22) and either a flange (13) of the respective guide pin (1) used to attach the respective guide (1) pin to the frame (4) or the frame (4) itself.

3. Wind turbine according to one of the preceding claims, **characterized in that** the diameter of the respective guide pin (1) widens in an end section (11) that extends beyond the side of the respective through hole (22) facing away from the frame (4), wherein the diameter of the end section (11) is smaller than the diameter of the respective through hole (22).

4. Wind turbine according to claim 3, **characterized in that** for each respective guide pin (1) at least a first and second fixing element (7, 10) are attached to the component (16) in such a way that a first surface (26) of the respective fixing element (7, 10) abuts a stopper surface (15) of the end section (11) of that guide pin (1) that extends at an angle to longitudinal direction of that guide pin (1) and faces towards the frame (4) and that a second surface (27) of the respective fixing element (7, 10) abuts a top surface (25) of the component (16) that extends at an angle to the inner surface (23) of the respective through hole (22) of the component (16) and that faces away from the frame (4).

5. Wind turbine according to claim 4, **characterized in that** the first and second fixing element (7, 10) are attached to the component (16) in such a way that they can slide along the top surface (25) over a given sliding range in at least one direction.

6. Wind turbine according to claim 4 or 5, **characterized in that** the respective fixing element (7, 10) is fixed to the component (16) by at least one fixing device (3), especially by a screw, wherein a section of the fixing device (3) passes through a through hole (14) of the fixing element (7, 10), wherein the diameter this section is smaller than the diameter of the through hole (14).

7. Wind turbine according to one of the preceding claims, **characterized in that** at least two of the pieces of elastomer (2, 9) are arranged between the inner surface (23) of the respective through hole (22) and the respective guide pin (1), wherein the two pieces cover different sections of the circumference of the respective guide pin (1) .

8. Wind turbine according to one of the preceding claims, **characterized in that** the component (16) is fixed to the frame using two of the guide pins (1), wherein the component comprises two support beams (8) that extend from a central body portion of the component (16), wherein each of the support beams (8) comprises one of the through holes (22), and wherein each of the guide pins (1) extends through a respective one of those through holes (22) .

9. Wind turbine according to one of the preceding claims, **characterized in that** a section (12) of the respective guide pin (1) extending through the respective through hole (22) of the component (16) is cylindrical.

10. Wind turbine according to one of the preceding claims, **characterized in that** angle between the longitudinal direction of the respective guide pin (1) and the vertical direction is less than 30° or less than 10°.

11. Wind turbine according to one of the preceding claims, **characterized in that** the component (16) is a gearbox.
